# EUROPEAN PATENT SPECIFICATION

(11) **EP 2 822 385 B1**
(45) Date of publication and mention of the grant of the patent: **26.07.2017**
(21) Application number: 13707638.6
(22) Date of filing: 06.03.2013
(51) Int. Cl.: A01N 43/36, B27K 3/34, A01P 9/00, A01M 99/00, B27K 3/40

(54) **USE OF TRALOPYRIL AGAINST MARINE WOODBORERS**
VERWENDUNG VON TRALOPYRIL GEGEN MEERESHOLZWÜRMER
UTILISATION DE TRALOPYRIL CONTRE DES XYLOPHAGES MARINS

(30) Priority: 07.03.2012 US 201261607764 P
(43) Date of publication of application: 14.01.2015
(73) Proprietor: Janssen Pharmaceutica, N.V., 2340 Beerse (BE)
(72) Inventor: VAN DER FLAAS, Mark Arthur Josepha, B-2340 Beerse (BE); HELMER, David Bruce, New Jersey 08560 (US); NYS, Jan Remi, B-2340 Beerse (BE)
(74) Representative: Verberckmoes, Filip Gerard
(86) International application number: PCT/EP2013/054472
(87) International publication number: WO 2013/131940

(56) References cited:
- EP-A1- 0 746 979
- EP-A1- 0 895 839
- EP-A2- 0 312 723
- WO-A2-02/083381

## Description

The present invention relates to a method for reducing or preventing the attack of marine woodborers on wood situated in a marine environment characterised by impregnating said wood with a biocidal composition comprising tralopyril.

Marine woodborers, also called shipworm, are not worms at all, but rather a group of unusual long worm shaped saltwater clams, the shell of which only covering some of the front end of the animal, that are notorious for boring into wooden structures that are immersed in sea water such as piers, docks and wooden ships. If a wooden structure becomes infested with shipworm it may only be a matter of months before the structural integrity becomes compromised to an extent where it is necessary to completely replace said wooden structure. The marine woodborers belong to several genera, of which *Teredo* is the most commonly mentioned. The best known species is *Teredo navalis* (Mollusca, Teredinidae).

Attack by shipworm often only appears as small holes into which the larvae have disappeared. The larva bores into the wooden structure and lines the passage with a thin layer of lime. A full grown shipworm can be up to 60 cm long and 0.8 cm in diameter. Marine woodborers greatly damage wooden hulls and marine piling, and have been the subject of much study to find methods to avoid their attacks. Copper sheathing was used on wooden ships in the latter 18^{th} century and afterwards, as a method of preventing damage by marine woodborers.

Tralopyril, or 4-bromo-2-(4-chlorophenyl)-5-(trifluoromethyl)-1 H-pyrrole-3-carbonitrile is disclosed in EP-0,312,723 for controlling mollusks. Said compound can be represented by the formula :

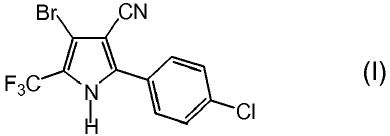

EP-0,746,979 describes the use of tralopyril in antifoulant compositions which are applied to underwater surfaces in order to prevent the attachment of fouling organisms to said underwater surfaces. EP-0,895,839 teaches that arylpyrroles, including tralopyril, are useful for protecting wood structures from wood-eating insects. WO-02/083,382 discloses that certain wood extracts protect wood against the shipworm.

It has now been found that the attack of marine woodborers on wood situated in a marine environment can be greatly reduced or even prevented by impregnating said wood with a biocidal composition comprising traloypril to obtain a concentration of tralopyril retained in said of wood of at least 1000 g/m³ (= 1 mg/cm³).

If additional biocides - that have biocidal activity against marine woodborers - are added to the biocidal compositions in accordance with the present invention, then a lower concentration of tralopyril of at least 1000 g/m³ in the impregnated wood will be sufficient to reduce or prevent the attack of marine woodborers on wood situated in a marine environment. For instance the concentration of tralopyril retained in the impregnated wood can be as low as 100 to 200 g/ m³ when additional biocides are used such as creosote or CCA (chromated copper arsenate).

Marine woodborers belong to several genera, of which *Teredo* is the most commonly mentioned. The best known *Teredo* species is *Teredo navalis.* Other species of marine borers are e.g. *Xylophaga dorsalis* (Mollusca, Pholadidae), *Psiloteredo megotara* (Mollusca, Teredinidae), *Nototeredo norvagica* (Mollusca, Teredinidae) and *Limnoria lignorum* (Crustacea, Limnoriidae) (*i.e.* "gribble").

As used herein, "wood," "wood material" and "wood products" shall mean all forms of wood, for example, solid wood (such as timber or lumber in the form of logs, beams, planks, sheets and boards), wood composite materials (such as plywood, laminated lumber, and wood plastic composites) and all products made from wood and wood-composite materials (such as shiphulls, harbour installations, drying docks, piers, sluice-gates, locks, mooring masts, wooden poles, bridges, bulkheading and the like).

The biocidal compositions used for impregnating wood comprise tralopyril and a carrier medium. In particular it is contemplated that the ready to use compositions for impregnating wood in accordance with the present invention comprise tralopyril in an amount down to 0.01 wt % based on the total weight of the composition. In particular such ready to use compositions comprise tralopyril in an amount from 0.01 wt% to 10 wt% based on the total weight of the composition. Other concentration ranges for the biocidal compositions comprising tralopyril are 0.01 wt% to 1 wt% and 0.1 wt% to 1.0 wt%, based on the total weight of the composition. In many instances the biocidal compositions to be used directly can be obtained from concentrated compositions, such as e.g. emulsifiable concentrates, suspension concentrates, or soluble concentrates. Upon dilution with organic media, such concentrates being intended to be covered by the term composition as used in the definitions of the present invention. The concentration of tralopyril in such concentrated compositions can be up to 50 wt% and these concentrates are diluted before use to obtain a concentration of tralopyril as set out above for the ready to use compositions.

Appropriate carrier media for the biocidal compositions are any liquid that does not adversely affect the active ingredients, for example, alcohols (for example, methyl alcohol, ethyl alcohol, ethylene glycol, propylene glycol, diethylene glycol, glycerin, etc.), ketones (for example, acetone, methyl ethyl ketone, acetophenone etc.), ethers (for example, dioxane, tetrahydrofuran, cellosolve, diethylene glycol dimethyl ether, etc.), aliphatic hydrocarbons (for example, hexane, kerosene, etc.), aromatic hydrocarbons (for example, benzene, toluene, xylene, solvent naphtha, methyl naphthalene, etc.), halogenated hydrocarbons (for example, chloroform, carbon tetrachloride, etc.), acid amides (for example, dimethyl formadide, etc.), esters (for example, methyl acetate ester, ethyl acetate ester, butyl acetate ester, fatty acid glycerin ester, etc.), and nitriles (for example, acetonitrile, etc.). Typical solvents are methanol, ethanol or xylene. These solvents may be used either singly or in combination of two or more species.

Emulsifiable concentrates of the biocidal compositions for use in accordance to the present invention can also be obtained upon dilution of the combination of tralopyril with at least a suitable organic solvent (*i.e.* a liquid carrier) followed by the addition of at least a solvent-soluble emulsifying agent. Solvents suitable for this type of formulation are usually water-immiscible and belong to the hydrocarbon, chlorinated hydrocarbon, ketone, ester, alcohol and amide classes of solvents, and they can be properly selected by those skilled in the art based on the solubility's of tralopyril. Emulsifiable concentrates usually contain, in addition to the organic solvent(s), from about 0.5 to 50% by weight of the combination of active ingredients, from about 2 to 20% of emulsifying agent(s) and up to 20% other additives such as stabilizers.

In order to reduce the attack of marine woodborers on wood situated in a marine environment said wood is impregnated with a biocidal composition comprising tralopyril. Such impregnation treatment is applied by several different procedures such as, for example, by treating the wood in closed high pressure or vacuum systems. The impregnation treatment can also be done by applying oscillating pressure or several vacuum pressure cycles in sequence. Another impregnation treatment method is by dipping or soaking the wood in a biocidal composition of the present invention.

An example of a closed high pressure system is the "full-cell process", also called "Bethell process", which is a method of impregnating wood with preservatives, devised in the 19th century by the U.S. inventor John Bethell. It involves sealing the wood in a pressure chamber and applying a vacuum in order to remove air and moisture from the wood cells. The wood is then pressure-treated with preservatives in order to impregnate the full wood cell (that is, the cell wall as well as the lumen, or interior) with substances that impart for instance resistance to decay, fire, insects, and wood-boring marine animals.

Another example of a closed high pressure system is the co-called "Rüping process" whereby wood is placed in an impregnation boiler under increased pressure followed by the introduction of the biocidal composition and release of pressure.

To obtain a concentration of retained tralopyril in wood of at least 1000 g/m³ (= 1 mg/cm³) by impregnating said wood with a biocidal composition comprising tralopyril it may be necessary to repeat the impregnation process a number of times until the desired concentration of retained tralopyril is reached.

### Experimental part

### Experiment 1 : marine field test according to EN 275

The effectiveness to reduce the presence of marine woodborers in wood situated in a marine environment was determined using the guidelines and recommendations in EN 275: 1992 - wood preservatives - determination of the protective effectiveness against marine woodborers.

### Wood Material

The wood material used for both control groups (untreated) and test groups was Scots pine sapwood (*Pinus sylvestris* L.). The size of the wood samples was 25 x 70 x 200 mm and all pine specimens were pure sapwood and free from defects.

### Impregnation

Full cell impregnation procedure :
- place specimens into a treatments vessel (e.g. an exsiccator)
- pull vacuum until 7 hPa is reached and hold said vacuum for 15 minutes
- flood specimens under vacuum with treatment solution until the specimens are completely immersed
- release vacuum and make sure that samples stay completely immersed while ambient pressure presses treatment solution into the specimens
- leave specimens for further 2 hours immersed in the treatment solution
- subsequently remove the specimens from the treatment solution, drain drip off solution for some minutes and place the specimens container on inert supports.
- keep specimens in the closed container for 3 days (over weekend) for fixation, subsequently open the lid every day a bit more and remove it completely after 4 days
- dry specimens in the open container at room temperature further 3 days

### Test solution :

### 1a) water dilutable formulation (emulsifiable concentrate)

| Product | Function | CAS number | Weight |
|---|---|---|---|
| tralopyril | biocide | 122454-29-9 | 100.0 |
| soprophor 796/P | emulsifier | 132580-45-1 | 130.0 |
| alkamuls BR | emulsifier | 61791-12-6 | 130.0 |
| antarox B/848 | emulsifier | | 130.0 |
| acetophenone | solvent | 98-86-2 | 500.0 |
| pine oil | odourenhancer | 8002-09-3 | 10.0 |
| | | | 1000.0 |

### 1 b) solvent based formulation

Tralopyril dissolved in methanol (1600 ppm and 400 ppm).

### Average retention :

1a) water dilutable formulation : 228 g and 846 g a.i./ m³
1b) solvent based formulation : 1087 g a.i./ m³

### Name and location of test site

Bay (Gullmar fjord) outside the Kristineberg Marine Research Station, 100 km north of Gothenburg, Sweden.

### Site characteristics

Temperature and salinity of water: Temperature varies between (18-22)°C in the summer and -1.5°C in mid-winter. Salinity varies between 26 g/kg and 34 g/kg. Good oxygen level due to a strong water flow.

Borer activity : there is borer activity all around the year. The most active borer specie, *Teredo navalis,* is active 11 months out of 12. The criterion for failure due to Teredo attack (tunnels covering more than 50% of the specimen area as it appears on the X-ray film) is often fulfilled already within 6 months for untreated control specimens. Maximum "service" life of untreated controls is approximately 1.5 years, after which the samples are often broken to pieces by the autumn storms.

### Installation conditions

Specimens were hung on nylon-bars (diameter = 24mm) of two ladder-like rigs placed on the sea bottom at 6 ± 0.4 m depth at low tide. The test rigs have heavy concrete foundations and each rig was kept upright by a 50 cm diameter buoy. As a result of the arrangement, the specimens are located at depths varying from 4 m to 6.5 m below water surface during the exposure period.

### Species of marine borers present

Gribbles : *Limnoria lignorum* (present but not very active)
Molluscs (the characteristics listed, are for the actual test site):
   *Teredo navalis* (most occurring specie), up to 7cm length during one growth season (11 months)
   *Nototeredo norvagica* (rare), up to 10 cm length during one growth season
   *Psiloteredo megotara* (rare), up to 20 cm during one growth season (5-6 months)
   *Xylophaga dorsalis* (mainly at higher depths), 3cm during one growth season

### Assessment of wood borer attack

**Table 1 : rating of attack on control (untreated Scots pine sapwood) and tralopyril impregnated wood by Limnoria I. and T. Navalis after 1 year and 2 years**

| Type of treatment | Sample number | Rating of attack by *Limnoria I.* 1^{st} year | Rating of attack by *Limnoria I.* 2^{nd} year | Rating of attack by *T. navalis* 1^{st} year | Rating of attack by *T. navalis* 2^{nd} year |
|---|---|---|---|---|---|
| control | 001 | 1 | 0 | 4 | 4 |
| | 002 | 1 | 0 | 4 | 4 |
| | 003 | 1 | 0 | 4 | 4 |
| | 004 | 1 | 0 | 4 | 4 |
| | 005 | 1 | 1 | 4 | 4 |
| | 006/G1 | 1 | - | 4 | - |
| | 006/G2 | 2 | - | 4 | - |
| | average | 1.1 | 0.2 | 4.0 | 4.0 |
| | | | | | |
| tralopyril 228 g/m³ | 114 | 0 | 0 | 2 | 4 |
| | 117 | 0 | 0 | 1 | 4 |
| | 117 | 0 | 0 | 4 | - |
| | average | 0.0 | 0.0 | 2.3 | 4.0 |
| | | | | | |
| tralopyril 846 g/m³ | 012 | 0 | 0 | 0 | 2 |
| | 013 | 0 | 0 | 0 | 1 |
| | 014 | 0 | 0 | 2 | 3 |
| | average | 0.0 | 0.0 | 0.7 | 2.0 |
| | | | | | |
| tralopyril 1087 g/m³ | 380 | 0 | 0 | 0 | 0 |
| | 381 | 0 | 0 | 0 | 1 |
| | 383 | 0 | 0 | 0 | 1 |
| | average | 0.0 | 0.0 | 0.0 | 0.7 |

### Scale Extent of destruction Destruction points and appearance

| | | |
|---|---|---|
| 0 | No destruction | No visible tunnel or destruction by marine organisms |
| 1 | Little destruction | Tunnels are one or a few number and up to cover 15% of total sample area |
| 2 | Moderate destruction | Tunnels cover between 15 - 25% of total sample area |
| 3 | Violent destruction | Tunnels cover between 25 - 50% of total sample area |
| 4 | Fully destruction | Tunnels covered more than 50% of total sample area |

The control samples were heavily damaged by the marine woodborer *Teredo navalis* within one year of submersion in seawater and some samples were destroyed the second year (indicated by '-' in Table 1).

The wood samples impregnated with tralopyril that was retained in the wood samples with a concentration of 228 g/m³ showed in average a moderate damage by the marine woodborer *Teredo navalis* within one year of submersion in seawater and full destruction after the second year.

The wood samples impregnated with tralopyril that was retained in the wood samples with a concentration of 846 g/m³ showed in average little damage by the marine woodborer *Teredo navalis* within one year of submersion in seawater and moderate damage after the second year.

The wood samples impregnated with tralopyril that was retained in the wood samples with a concentration of 1087 g/m³ showed no damage by the marine woodborer *Teredo navalis* within one year of submersion in seawater and in average only little damage the second year.

### Description of the drawings

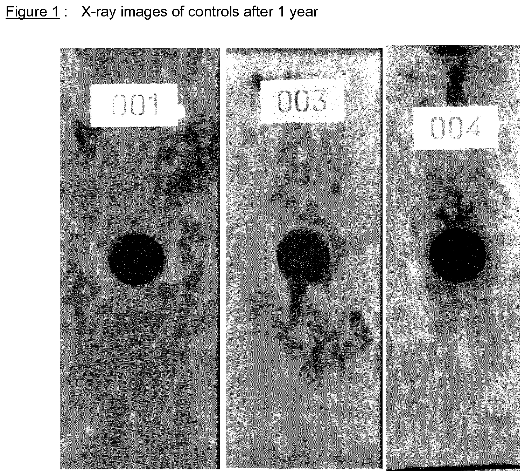

Figure 1 : X-ray images of controls after 1 year

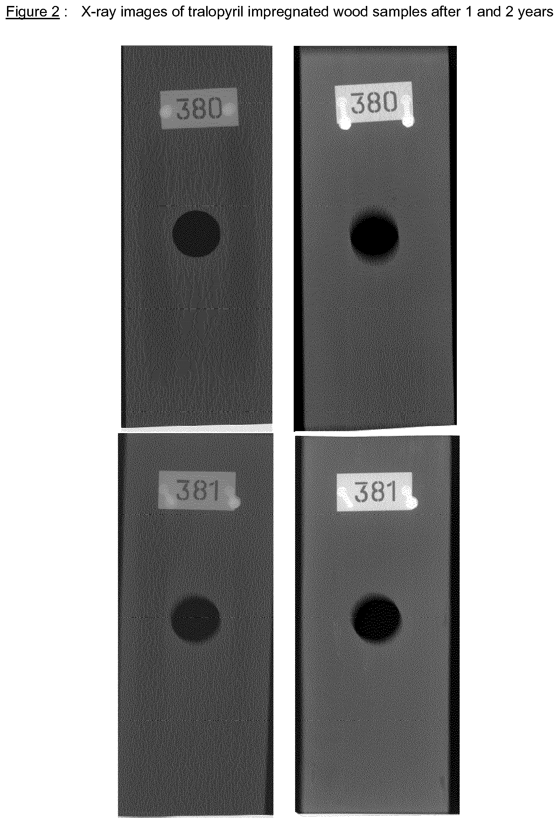

Figure 2 : X-ray images of tralopyril impregnated wood samples after 1 and 2 years

## Claims

1. A method for reducing or preventing the attack of marine woodborers on wood situated in a marine environment **characterised by** impregnating said wood with a biocidal composition comprising tralopyril in an amount of at least 0.01 wt % based on the total weight of the composition to obtain a concentration of tralopyril retained in said of wood of at least 1000 g/m³.

2. The method as claimed in claim 1 wherein the biocidal composition comprises tralopyril in an amount ranging from 0.01 wt% to 10 wt% based on the total weight of the composition.

3. The method as claimed in claim 2 wherein the biocidal composition comprises tralopyril in an amount ranging from 0.01 wt% to 1 wt% based on the total weight of the composition.

4. The method as claimed in claim 3 wherein the biocidal composition comprises tralopyril in an amount ranging from 0.1 wt% to 1 wt% based on the total weight of the composition.

5. The method as claimed in any one of claims 1 to 4 wherein wood is impregnated with a biocidal composition comprising tralopyril in a closed high pressure system.

6. The method as claimed in any one of claims 1 to 4 wherein wood is impregnated with a biocidal composition comprising tralopyril in a vacuum pressure treatment system.

7. The method as claimed in any one of claims 1 to 4 wherein wood is impregnated with a biocidal composition comprising tralopyril by a treatment applying oscillating pressure or several vacuum pressure cycles in sequence.

8. The method as claimed in any of the preceding claims wherein the biocidal composition comprising tralopyril is an emulsifiable concentrate.

9. The method as claimed in any of the preceding claims wherein the biocidal composition comprising tralopyril is a soluble concentrate.

10. The method as claimed in claim 9 wherein the solvent of the soluble concentrate is methanol, ethanol or xylene.

## Patentansprüche

1. Verfahren zum Vermindern oder Verhindern von Befall von in einer Meeresumwelt befindlichem Holz durch Schiffsbohrwürmer, **dadurch gekennzeichnet, dass** man das Holz mit einer bioziden Zusammensetzung imprägniert, die Tralopyril in einer Menge von mindestens 0,01 Gew.-% in Bezug auf das Gesamtgewicht der Zusammensetzung umfasst, um zu einer in dem Holz zurückbehaltenen Tralopyrilkonzentration von mindestens 1000 g/m³ zu gelangen.

2. Verfahren nach Anspruch 1, wobei die biozide Zusammensetzung Tralopyril in einer Menge im Bereich von 0,01 Gew.-% bis 10 Gew.-% in Bezug auf das Gesamtgewicht der Zusammensetzung umfasst.

3. Verfahren nach Anspruch 2, wobei die biozide Zusammensetzung Tralopyril in einer Menge im Bereich von 0,01 Gew.-% bis 1 Gew.-% in Bezug auf das Gesamtgewicht der Zusammensetzung umfasst.

4. Verfahren nach Anspruch 3, wobei die biozide Zusammensetzung Tralopyril in einer Menge im Bereich von 0,1 Gew.-% bis 1 Gew.-% in Bezug auf das Gesamtgewicht der Zusammensetzung umfasst.

5. Verfahren nach einem der Ansprüche 1 bis 4, wobei Holz in einem geschlossenen Hochdrucksystem mit einer bioziden Zusammensetzung umfassend Tralopyril imprägniert wird.

6. Verfahren nach einem der Ansprüche 1 bis 4, wobei Holz in einem Vakuumdruckbehandlungssystem mit einer bioziden Zusammensetzung umfassend Tralopyril imprägniert wird.

7. Verfahren nach einem der Ansprüche 1 bis 4, wobei Holz mit einer bioziden Zusammensetzung umfassend Tralopyril durch eine Behandlung, bei der ein Oszillationsdruck oder mehrere Vakuumdruckzyklen aufeinanderfolgend eingesetzt werden, imprägniert wird.

8. Verfahren nach einem der vorhergehenden Ansprüche, wobei es sich bei der bioziden Zusammensetzung umfassend Tralopyril um ein Emulsionskonzentrat handelt.

9. Verfahren nach einem der vorhergehenden Ansprüche, wobei es sich bei der bioziden Zusammensetzung umfassend Tralopyril um ein lösliches Konzentrat handelt.

10. Verfahren nach Anspruch 9, wobei es sich bei dem Lösungsmittel des löslichen Konzentrats um Methanol, Ethanol oder Xylol handelt.

## Revendications

1. Procédé pour réduire ou prévenir l'attaque par les xylophages marins de bois situé dans un environnement marin, **caractérisé par** l'imprégnation dudit bois avec une composition biocide comprenant du tralopyril dans une quantité d'au moins 0,01 % en poids relativement au poids total de la composition pour obtenir une concentration de tralopyril retenu dans ledit bois d'au moins 1 000 g/m³.

2. Procédé selon la revendication 1, dans lequel la composition biocide comprend du tralopyril dans une quantité de 0,01 % en poids à 10 % en poids relativement au poids total de la composition.

3. Procédé selon la revendication 2, dans lequel la composition biocide comprend du tralopyril dans une quantité de 0,01 % en poids à 1 % en poids relativement au poids total de la composition.

4. Procédé selon la revendication 3, dans lequel la composition biocide comprend du tralopyril dans une quantité de 0,1 % en poids à 1 % en poids relativement au poids total de la composition.

5. Procédé selon l'une quelconque des revendications 1 à 4, dans lequel le bois est imprégné d'une composition biocide comprenant du tralopyril dans un système fermé à haute pression.

6. Procédé selon l'une quelconque des revendications 1 à 4, dans lequel le bois est imprégné d'une composition biocide comprenant du tralopyril dans un système de traitement sous vide.

7. Procédé selon l'une quelconque des revendications 1 à 4, dans lequel le bois est imprégné d'une composition biocide comprenant du tralopyril par un traitement comprenant l'application d'une pression oscillante ou plusieurs cycles de mise sous vide dans un ordre donné.

8. Procédé selon l'une quelconque des revendications précédentes, dans lequel la composition biocide comprenant le tralopyril est un concentré émulsifiable.

9. Procédé selon l'une quelconque des revendications précédentes, dans lequel la composition biocide comprenant le tralopyril est un concentré soluble.

10. Procédé selon la revendication 9, dans lequel le solvant du concentré soluble est le méthanol, l'éthanol ou le xylène.
